# EUROPÄISCHE PATENTSCHRIFT

(11) **EP 1 777 109 B1**
(45) Veröffentlichungstag und Bekanntmachung des Hinweises auf die Patenterteilung: **21.05.2008**
(21) Anmeldenummer: 06018781.2
(22) Anmeldetag: 07.09.2006
(51) Int. Cl.: B60R 7/04

(54) **Flachbahn-Rolloabdeckung**
Cover in the form of a flat sheet roller blind
Couvercle formé par un store enroulable à bande plate

(30) Priorität: 24.10.2005 DE 102005050825
(43) Veröffentlichungstag der Anmeldung: 25.04.2007
(73) Patentinhaber: Lisa Dräxlmaier GmbH, 84137 Vilsbiburg (DE)
(72) Erfinder: Gösling, Ulrich, 67346 Speyer (DE); Herbert, Roland, 76344 Leopoldshafen (DE); Janzer, Peter, 76646 Bruchsal-Obergrombach (DE)
(74) Vertreter: HOFFMANN EITLE

(56) Entgegenhaltungen:
- DE-A1- 4 010 241
- DE-A1- 19 646 809
- DE-U1-9202004 006 64
- US-A1- 2004 118 851

## Beschreibung

Die vorliegende Erfindung betrifft eine Flachbahn-Rolloabdeckung für eine Öffnung in einem Innenausstattungsteil eines Fahrzeuges mit einer elastischen, ein- oder mehrlagigen Trägerschicht, einer auf dieser befestigten Dekorschicht, sowie einem die Sichtfläche der Dekorschicht abdeckenden Überzug.

Bekannte Flachbahn-Rolloabdeckungen dieser Art (vergleiche beispielsweise DE 20 2004 006 649 U1 werden bei Fahrzeugen im Allgemeinen als sogenannte Staufachabdeckungen eingesetzt.

Als Tragkonstruktion derartiger Flachbahn-Rolloabdeckungen dient dabei eine meist nur in einer Ebene biegsame ein- oder mehrlagige Trägerschicht, die im Bereich ihrer einander gegenüberliegenden Längsränder in einer im Bereich des Öffnungsrandes verlaufenden Kulissenführung geführt ist.

Diese Trägerschicht kann eine einfache biegsame Kunststoffoder Stahlblechplatte sein oder aus einem mit Querrippen und/oder einem Draht- oder Textilgewebe verstärkten Trägerstreifen aus Kunststoff bestehen.

Als Dekorschicht kann eine dem jeweils gewünschten Erscheinungsbild entsprechende Textilmaterial-, Carbon-, Kunststoff- oder Lederschicht vorgesehen werden. Sofern der Faserverlauf, die Schichtdicke und die Elastizität entsprechend gewählt werden, kann bei Auswahl einer geeigneten Holzart auch ein dünnes flexibles Echtholzfurnier als Dekorschicht eingesetzt werden.

Die Sichtfläche der Dekorschicht wird zum Schutz der Oberfläche dann meist noch durch eine wenige µ-starke Lackschicht abgedeckt.

Aufgabe der vorliegenden Erfindung ist es, eine Flachbahn-Rolloabdeckung, insbesondere für den Einsatz in Innenausstattungsteilen an Fahrzeugen zu schaffen, die auch die Verwendung von schwierigen oder weniger flexiblen Materialien als Dekorschicht ermöglicht.

Diese Aufgabe wird erfindungsgemäß dadurch gelöst, dass der Überzug eine mit der Sichtfläche der Dekorschicht fest verbundene elastische Stützschicht mit einer Schichtstärke von mindestens 0,3 mm ist.

Der Erfindung liegt der Gedanke zugrunde, die Dekorschicht nicht wie bisher üblich als reine, lediglich durch eine Lackschicht geschützte Oberflächenbeschichtung für die die statischen Funktionen erfüllende Trägerschicht vorzusehen, sondern die Dekorschicht zwischen der Trägerschicht und einer starken Stützschicht einzuspannen, d.h. einen Schichtenverbund zu schaffen, bei dem die Dekorschicht zwischen der Trägerschicht und der Stützschicht möglichst nahe der neutralen Faser dieses Schichtenverbundes eingespannt ist.

Grundsätzlich kann die Stützschicht aus jeder Art von elastischem Stützmaterial bestehen. Wesentlich ist lediglich, dass dieses Stützmaterial auch bei Schichtstärken bis 3 mm noch transparent und hochglänzend ist. Hierzu eignen sich insbesondere speziell eingestellte, d.h. weich formulierte PUR-Schichten.

Aufgrund der erfindungsgemäßen Anordnung der Stützschicht und des Vorsehens eines Schichtenverbundes können als Dekorschicht auch schwierige Dekormaterialien zum Einsatz gelangen.

So kann die Dekorschicht eine Echtholzfurnierschicht aus einer Holzart, beispielsweise aus Eichenholz sein, wie diese bisher aufgrund ihrer Härte nicht für herkömmliche Flachbahn-Rolloabdeckungen eingesetzt werden konnte. Aufgrund der erfindungsgemäßen Ausgestaltung ist es sogar möglich, als Dekorschicht eine Steinfurnierschicht vorzusehen.

Im Falle von sehr harten Dekorschichtmaterialien, wie beispielsweise einer Steinfurnierschicht, ist es erforderlich, diese vor dem Aufbringen auf die Trägerschicht zu flexibilisieren, d.h. den Verbund bis zur Rissbildung aufzulösen. Hierfür ist es allerdings erforderlich, dass die Dekorschicht auf der der Trägerschicht zugewandten Seite mit einer Zwischenschicht ausgestattet wird, die die harte Dekorschicht bei der Flexibilisierung im Verbund zusammenhält und bei der Herstellung des Schichtenverbundes die Anordnung der Dekorschicht auf der Trägerschicht ermöglicht.

Im Falle des Einsatzes von harten Dekorschichten, wie beispielsweise einer Steinfurnierschicht, ist es darüber hinaus zweckmäßig, zwischen der Sichtfläche der Dekorschicht und der Stützschicht eine Haftvermittlerschicht anzuordnen, um einen festen Schichtenverbund sicherzustellen.

Die im Falle einer Flexibilisierung einer sehr harten Dekorschicht nicht zu vermeidende Rissbildung tritt aufgrund der elastischen Stützschicht optisch entweder nicht in Erscheinung oder wird vom Betrachter als von Natur aus gegeben wahrgenommen.

Dem optischen Eindruck einer etwaigen Rissbildung kann im Übrigen durch Einfärben der der Dekorschicht zugewandten Seite der Trägerschicht entgegengewirkt werden.

Im Folgenden ist zur weiteren Erläuterung und zum besseren Verständnis ein Ausführungsbeispiel der erfindungsgemäßen Flachbahn-Rolloabdeckung unter Bezugnahme auf die beigefügten Zeichnungen näher beschrieben und erläutert.
- Figur 1: zeigt eine perspektivische Ansicht einer erfindungsgemäßen Flachbahn-Rolloabdeckung, und
- Figur 2: zeigt schematisch den Schichtaufbau der Flachbahn-Rolloabdeckung gemäß Figur 1.

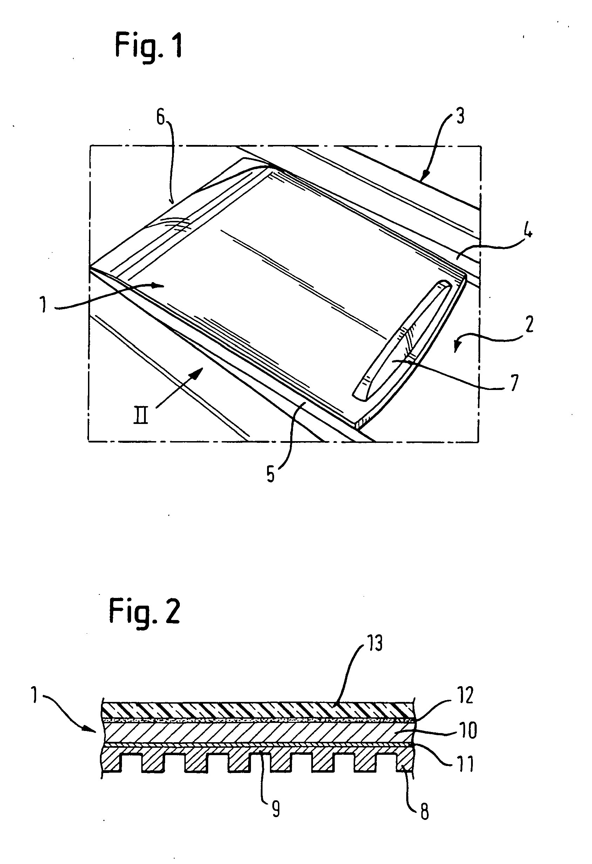

Die in Figur 1 dargestellte Flachbahn-Rolloabdeckung 1 dient zum Öffnen und Verschließen einer Öffnung 2 eines Innenausstattungsteiles 3, welches in Figur 1 lediglich angedeutet und nur teilweise dargestellt ist.

Die Öffnung 2 des Innenausstattungsteiles 3 wird von zwei parallel zueinander verlaufenden Kulissenführungen 4 und 5 begrenzt, in denen die Ränder der Flachbahn-Rolloabdeckung 1 geführt sind.

Im vorliegenden Ausführungsbeispiel verlaufen die Kulissenführungen 4 und 5 im Bereich der Öffnung 2 überwiegend in einer Ebene. Im Bereich des in Figur 1 oben links dargestellten Öffnungsrandes 6 sind die Kulissenführungen 4, 5 in bekannter Weise abgebogen und verlaufen in einen im Innenausstattungsteil 3 vorgesehenen, in Figur 1 nicht dargestellten Schacht, der die gesamte Flachbahn-Rolloabdeckung im nach links verschobenen, d.h. die Öffnung 2 freigebenden Zustand aufnimmt.

Zur Betätigung der Flachbahn-Rolloabdeckung 1 ist ein Handgriff 7 vorgesehen, über den die Flachbahn-Rolloabdeckung entlang der Kulissenführungen 4 und 5 in bekannter Weise verschoben werden kann.

Wie Figur 2 zeigt, besteht die Flachbahn-Rolloabdeckung 1 aus einem Schichtenverbund einer Anzahl von Schichten.

Die statische Funktion, d.h. die Stabilität der Flachbahn-Rolloabdeckung 1 wird von einer Trägerschicht 8 übernommen, die im vorliegenden Ausführungsbeispiel aus sich quer über die Öffnung 2 in Richtung des Pfeils II in Figur 1 erstreckenden Rippen besteht, welche über eine Tragschicht 9 einstückig miteinander verbunden sind. Derartige rippenverstärkte Trägerschichten 8 sind in ein- oder mehrlagiger Form bereits bekannt.

Auf der Oberseite der Trägerschicht 8 ist eine Dekorschicht 10 angeordnet. Diese Dekorschicht 10 kann entweder unmittelbar oder über eine Zwischenschicht 11 auf der Trägerschicht 8 befestigt sein.

Bei schwierigen Dekormaterialien, wie beispielsweise einer Steinfurnierschicht, ist die Zwischenschicht 11 vorteilhaft, da sie bei der Vorbehandlung der Dekorschicht, wie beispielsweise bei der Flexibilisierung als Zwischenträger dient, über den die Dekorschicht dann mit der Trägerschicht, beispielsweise durch Aufkleben verbunden wird.

Im vorliegenden Ausführungsbeispiel ist auf der Sichtseite der Dekorschicht 10 eine Haftvermittlerschicht 12 aufgebracht, die die erfindungsgemäße elastische Stützschicht 13 trägt. Diese Stützschicht 13 ist transparent und vermittelt bei entsprechender Schichtstärke aufgrund ihrer Linsenwirkung einen Tiefeneffekt, der ein besonderes Erscheinungsbild der Sichtfläche der Dekorschicht 10 vermittelt. Bei entsprechender Schichtdicke kann die Stützschicht 13 ggf. auch eine Lichtleitfunktion zur Beleuchtung der Flachbahn-Rolloabdeckung übernehmen.

Erfindungsgemäß bilden die Trägerschicht 8, die Dekorschicht 10 und die Stützschicht 13 einen Schichtenverbund, bei dem die Dekorschicht nahe der neutralen Phase der Flachbahn-Rolloabdeckung eingespannt ist, so dass auch schwierige, weniger flexible oder sogar sehr harte Materialien als Dekorschicht eingesetzt werden können.

## Patentansprüche

1. Flachbahn-Rolloabdeckung für eine Öffnung (2) in einem Innenausstattungsteil (3) eines Fahrzeuges,
- mit einer elastischen, ein- oder mehrlagigen Trägerschicht (8),
- einer auf dieser befestigten Dekorschicht (10), sowie
- einem die Sichtfläche der Dekorschicht abdeckenden Überzug,
**dadurch gekennzeichnet, dass**
der Überzug eine mit der Sichtfläche der Dekorschicht (10) fest verbundene elastische Stützschicht (13) mit einer Schichtstärke von mindestens 0,3 mm ist.

2. Flachbahn-Rolloabdeckung nach Anspruch 1, **dadurch gekennzeichnet, dass** die elastische Stützschicht (13) eine transparente, hochglänzende Kunststoffschicht mit einer Schichtstärke zwischen 0,3 mm und 3,0 mm ist.

3. Flachbahn-Rolloabdeckung nach Anspruch 2, **dadurch gekennzeichnet, dass** die elastische Stützschicht (13) eine weich formulierte PUR-Schicht ist.

4. Flachbahn-Rolloabdeckung nach Anspruch 1, **dadurch gekennzeichnet, dass** die Dekorschicht (10) eine Schichtstärke von 0,2 mm bis 1,5 mm aufweist.

5. Flachbahn-Rolloabdeckung nach Anspruch 4, **dadurch gekennzeichnet, dass** die Dekorschicht (10) eine Echtholzfurnierschicht ist.

6. Flachbahn-Rolloabdeckung nach Anspruch 4, **dadurch gekennzeichnet, dass** die Dekorschicht (10) eine Steinfurnierschicht ist.

7. Flachbahn-Rolloabdeckung nach einem oder mehreren der vorhergehenden Ansprüche, **dadurch gekennzeichnet, dass** zwischen der Sichtfläche der Dekorschicht (10) und der Stützschicht (13) eine Haftvermittlerschicht (12) angeordnet ist.

8. Flachbahn-Rolloabdeckung nach Anspruch 1, 5 oder 6, **dadurch gekennzeichnet, dass** die Dekorschicht (10) auf der der Trägerschicht (8) zugewandten Seite mit einer Zwischenschicht (11) ausgestattet ist.

## Claims

1. Flat-web roller blind cover for an aperture (2) in an interior equipment part (3) of a vehicle,
- having an elastic, single- or multi-ply carrier layer (8),
- a decorative layer (10) attached thereto, as well as
- a coating covering the visible surface of the decorative layer,
**characterized in that**
the coating is an elastic overlay (13) with a layer thickness of at least 0.3 mm permanently bonded to the visible surface of the decorative layer (10).

2. Flat-web roller blind cover according to claim 1, **characterized in that** the elastic overlay (13) is a transparent, high-gloss plastic layer with a layer thickness between 0.3 mm and 3 mm.

3. Flat-web roller blind cover according to claim 2, **characterized in that** the elastic overlay (13) is a soft formulation PUR layer.

4. Flat-web roller blind cover according to claim 1, **characterized in that** the decorative layer (10) has a layer thickness of 0.2 mm to 1.5 mm.

5. Flat-web roller blind cover according to claim 4, **characterized in that** the decorative layer (10) is a real wood veneer layer.

6. Flat-web roller blind cover according to claim 4, **characterised in that** the decorative layer (10) is a stone veneer layer.

7. Flat-web roller blind cover according to one or a plurality of the preceding claims, **characterised in that** a coupling agent layer (12) is disposed between the visible surface of the decorative layer (10) and the overlay (13).

8. Flat-web roller blind cover according to claim 1, 5 or 6, **characterized in that** the decorative layer (10) is provided with an intermediate layer (11) on the side facing towards the carrier layer (8).

## Revendications

1. Couvercle formé par un store enroulable à bande plate, pour une ouverture (2) dans une partie d'équipement intérieur (3) d'un véhicule,
- avec une couche support (8) élastique à une ou plusieurs nappes,
- une couche de décor (10), fixée sur celle-ci, et
- un revêtement, couvrant la face visible de la couche de décor,
**caractérisé en ce que**
le revêtement est une couche d'appui (13) élastique reliée rigidement à la face visible de la couche de décor (10), ayant une épaisseur de couche d'au moins 0,3 mm.

2. Couvercle formé par un store enroulable selon la revendication 1, **caractérisé en ce que** la couche d'appui (13) élastique est une couche en matière synthétique très brillante, transparente, avec une épaisseur de couche comprise dans la fourchette entre 0,3 et 3,0 mm.

3. Couvercle formé par un store enroulable selon la revendication 2, **caractérisé en ce que** la couche d'appui (13) élastique est une couche de PUR formulée pour être souple.

4. Couvercle formé par un store enroulable selon la revendication 1, **caractérisé en ce que** la couche de décor (10) présente une épaisseur de couche de 0,2 mm à 1,5 mm.

5. Couvercle formé par un store enroulable selon la revendication 4, **caractérisé en ce que** la couche de décor (10) est une couche de placage en vrai bois.

6. Couvercle formé par un store enroulable selon la revendication 4, **caractérisé en ce que** la couche de décor (10) est une couche de placage pierreux.

7. Couvercle formé par un store enroulable selon l'une ou plusieurs des revendications précédentes, **caractérisé en ce qu'**entre la face visible de la couche de décor (10) et la couche d'appui (13) est disposée une couche d'adhésif ou agent d'accrochage (12).

8. Couvercle formé par un store enroulable selon la revendication 1, 5 ou 6, **caractérisé en ce que** la couche de décor (10), sur la face tournée vers la couche support (8), est équipée d'une couche intermédiaire (11).
